Europäisches Patentamt

European Patent Office

Office européen des brevets

(19)

(11) Publication number: **0 075 387**
**A1**

# (12) EUROPEAN PATENT APPLICATION

(21) Application number: **82304322.9**

(22) Date of filing: **17.08.82**

(51) Int. Cl.³: **F 16 D 13/71**

(30) Priority: **31.08.81 IT 2369981**

(43) Date of publication of application: **30.03.83**
**Bulletin 83/13**

(84) Designated Contracting States: **BE DE FR GB IT SE**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Cucinotta, Luigi, Via Medi 4, Castelbellino Ancona (IT)**

(74) Representative: **Farrow, Robert Michael, Patent Department Automotive Products plc Tachbrook Road, Leamington Spa Warwickshire CV31 3ER (GB)**

(54) **Friction clutch mechanism.**

(57) A friction clutch mechanism in which a pressure plate (18) is attached to a dished cover pressing (11, 11A) by flexible drive straps (19, 19A). The cover pressing has an outer peripheral flange (17) for fixing to a reaction plate (14) and the drive straps (19, 19A) are fastened to the pressing on fixing zones (22) axially offset from the flange. The drive straps (19, 19A) are fastened to the cover pressing by fastener means including spacer members (23, 23A) which can be fastened rigidly to the reaction plate (14).

-1-

## "Friction Clutch Mechanism"

The invention relates to friction clutch mechanisms of the kind in which at least one pressure plate is axially movable relative to a dished cover pressing and is constrained to rotate with the cover pressing by means of flexible drive straps.

Usually the cover pressing has an outer peripheral flange for fixing to a reaction plate and it is common practice to fasten the drive straps to the cover pressing at fixing zones near the periphery of the cover which fixing zones are offset axially from the flange. This complicates the design of the cover pressing in that the outer flange is interrupted to provide the fixing zones and clearance for the drive straps. Hence care must be taken to ensure that the cover retains sufficient strength and stiffness. GB 1 578 450 and GB-A-2 022 730 show typical cover pressings of the known type.

It is an object of the invention to provide fastening means for the drive straps of a friction clutch mechanism of the kind described which do not detract from the strength and stiffness of the cover pressing.

According to the present invention, in a friction clutch mechanism of the kind described, spacer members are interposed between the reaction plate and the fixing zones, the spacer members being adapted to be fastened rigidly to the reaction plate and including fastener means which connect the drive straps to the cover pressing. Thus the cover can be firmly attached to the reaction plate in the region of the fixing zones. In the case of a clutch having two pressure plates (e.g. a twin plate clutch) drive straps for the second pressure plate can conveniently be fastened between the spacer members and the reaction plate.

The invention and other aspects thereof will now be described by way of example with reference to the accompanying drawings, of which:-

Fig. 1 is a cross-section through a twin-plate friction clutch mechanism according to the invention;

Fig. 2 is a partial cross-section on line I-I in Fig. 1 (with some parts removed); and

Fig. 3 is a view similar to Fig. 2 showing a modification.

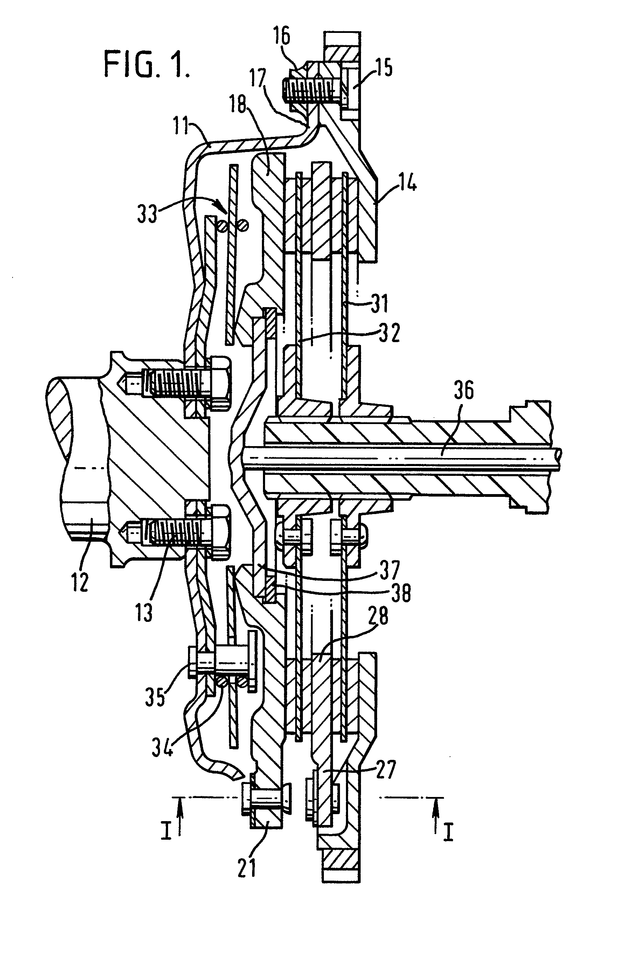

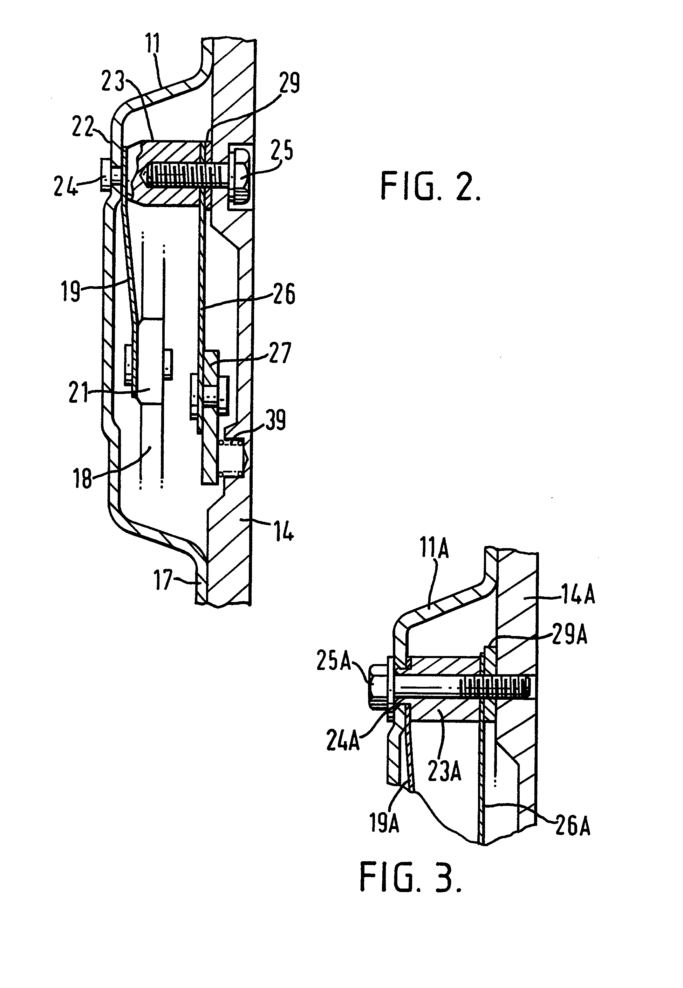

Referring to Figs. 1 and 2, the friction clutch mechanism includes a dished cover pressing 11 which is fastened to an engine crankshaft 12 by set-screws 13 and to a reaction plate 14 by means of set-screws 15 which screw into captive nuts 16 attached to an outer peripheral flange 17.

A main pressure plate 18 is fastened to the cover pressing 11 by three tangential drive straps 19 of flexible strip material. Each drive strap 19 is rivetted to a respective lug 21 integral with pressure plate 18 and is fastened to a respective fixing zone 22 on the cover 11 by a respective spacer member 23 having fastener means in the form of a solid rivetted projection 24. Each spacer member 23 has a screw threaded recess and is fastened to the reaction plate 14 by setscrew 25 which also serves to clamp one of a further set of three drive straps 26 between the spacer member 23 and the reaction plate 14. These further drive straps 26 are attached to lugs 27 on a second (or intermediate) pressure plate 28. As shown in Fig. 2 a washer 29 is interposed between the strap 26 and the reaction plate 14, but this is optional and may be replaced by a boss integral with the reaction plate 14.

Driven plates 31 and 32 are respectively clamped between the intermediate pressure plate 28 and the reaction plate 14 and between the main pressure plate 18 and the intermediate pressure plate 28. Clamping load is provided by a diaphragm spring 33 located by conventional fulcrum rings 34 and rivets 35. The diaphragm spring 33 comprises an outer Belleville spring portion and inwardly directed fingers, the clamping load being applied through the inner ends of the spring fingers. Release of the clutch is provided by a pushrod 36 operating on the main pressure plate 18 through a thrust plate 37 secured by a circlip 38.

When torque is being transmitted through the clutch the drive straps 19 and 26 transmit the drive to the respective pressure plates 18 and 28 whilst allowing sufficient axial movement of the pressure plates for clutch release. The main pressure plate is biassed slightly away from driven plate 32 by the distortion of drive straps 19 from their free condition in which they are flat. Helical springs 39 act on the intermediate pressure plate lugs 27 to bias the intermediate pressure plate out of engagement with driven plate 31 during clutch release.

The spacers 23 ensure a rigid construction of the cover pressing 11 in the region of the drive straps 19 and help to strengthen the cover in this region.

The modification shown in Fig. 3 shows a spacer 23A which has a tubular projection 24A peened over to retain the spacer 23A to the cover and secure drive strap 19A. A set bolt 25A is screwed into the reaction plate 14A from the opposite direction to setscrew 25 (Fig. 2) so that this construction is suitable for clutches in which the reaction plate is a flywheel bolted direct to an engine crankshaft.

Although the invention has been described in detail in relation to a twin plate clutch it is equally applicable to single plate clutches in which the intermediate pressure plate 28 and associated drive straps 26 are omitted.

Claims

1.      A friction clutch mechanism in which at least one pressure plate (18) is axially movable relative to a dished cover pressing (11) and is constrained to rotate with the cover pressing by means of flexible drive straps (19,19A), the cover pressing having an outer peripheral flange (17) for fixing to a reaction plate (14) and the drive straps being fastened to the cover pressing at fixing zones (22) near the periphery of the cover which fixing zones are offset axially from the flange, characterised in that spacer members (23,23A) are interposed between the reaction plate (14) and the fixing zones (22), the spacer members (23,23A) being adapted to be fastened rigidly to the reaction plate (14) and including fastener means (24,24A) which connect the drive straps (19,19A) to the cover pressing (11).

2.      A friction clutch mechanism according to Claim 1, characterised in that drive straps (26,26A) for an intermediate pressure plate (27) are in use fastened between the spacer members (23,23A) and the reaction plate (14).

3.        A friction clutch mechanism according to Claim 1 or Claim 2, characterised in that said fastener means comprises a projection (24,24A) on each spacer member (23,23A) which passes through the respective drive strap (19,19A) and is rivetted or peened to fix the spacer member (23,23A) and the drive strap (19,19A) to the cover pressing (11,11A).

4.        A friction clutch mechanism according to Claim 3, characterised in that the projection (24) is solid, each spacer member (23) being fastened to the reaction plate (14) by a setscrew (25) which engages in a screw-threaded recess in the spacer member (23).

5.        A friction clutch mechanism according to Claim 3, characterised in that the projection (24A) is tubular to permit the spacer member (23A) to be secured by setbolts (25A) passing through the cover pressing (11A) and the spacer member (23A).

FIG. 1.

FIG. 2.

FIG. 3.

European Patent
Office

**EUROPEAN SEARCH REPORT**

0075387
Application number

EP    82 30 4322

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 D    13/71 |
| X | GB-A-1 215 190  (AUTOMOTIVE) *Page  2,  lines  44-108; figures 4-6* | 1,3,5 | |
| | --- | | |
| X | US-A-3 554 342  (SPOKAS) *Column  1,  lines 62-64; figures 2,4* | 1 | |
| | --- | | |
| A | FR-A-2 080 730  (LUK) *Page  11, figure 2* & GB - A - 1 284 378 | 1,2,5 | |
| | --- | | |
| A | GB-A- 951 627  (BORG-WARNER) *Page 2, lines 63-68; figure 3* | 1,4 | |
| | --- | | |
| A | GB-A-1 435 908  (AUTOMOTIVE) *Pages 3-4; figures 5-9* | 1,5 | TECHNICAL FIELDS SEARCHED (Int. Cl. ³) |
| | --- | | F 16 D |
| A | GB-A- 994 283  (AUTOMOTIVE) *The whole document* | 1 | |
| | --- | | |
| A | FR-A-1 280 746  (FERODO) | | |
| | --- | | |
| A | FR-A-2 059 206  (LUK) | | |
| | --- | | |
| A | FR-A-2 135 636  (LUK) | | |
| | ---                    -/- | | |

The present search report has been drawn up for all claims

| Place of search THE HAGUE | Date of completion of the search 18-11-1982 | Examiner ORTHLIEB CH.E. |
|---|---|---|

0075387
Application number

# EUROPEAN SEARCH REPORT

EP 82 30 4322

European Patent Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | FR-A-2 381 938 (AUTOMOTIVE) | | |
| A | DE-A-2 605 623 (FERODO) | | |
| A | DE-A-2 658 744 (LUK) | | |
| D | GB-A-1 578 450 | | |
| D | GB-A-2 022 730 | | |

TECHNICAL FIELDS SEARCHED (Int. Cl. 3)

The present search report has been drawn up for all claims

| Place of search | Date of completion of the search | Examiner |
|---|---|---|
| THE HAGUE | 18-11-1982 | ORTHLIEB CH.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82